# EUROPÄISCHE PATENTSCHRIFT

(11) **EP 2 511 206 B1**
(45) Veröffentlichungstag und Bekanntmachung des Hinweises auf die Patenterteilung: **05.09.2018**
(21) Anmeldenummer: 12162595.8
(22) Anmeldetag: 30.03.2012
(51) Int. Cl.: B65G 47/86

(54) **Transportvorrichtung zum Tranportieren von Behältern**
Transport device for transporting containers
Dispositif de transport de récipients

(30) Priorität: 13.04.2011 DE 102011007308
(43) Veröffentlichungstag der Anmeldung: 17.10.2012
(73) Patentinhaber: Krones AG, 93073 Neutraubling (DE)
(72) Erfinder: Klarl, Hermann, 93073 Neutraubling (DE); Knieling, Erwin, 93073 Neutraubling (DE)
(74) Vertreter: Grünecker Patent- und Rechtsanwälte PartG mbB

(56) Entgegenhaltungen:
- EP-A1- 1 342 678
- DE-A1- 2 701 756
- DE-A1-102009 006 423
- DE-U1-202005 002 924
- US-A- 3 040 492
- US-A- 5 743 377

## Beschreibung

Die Erfindung betrifft eine Transportvorrichtung zum Transportieren von Behältern, insbesondere von Flaschen.

In Behälterbehandlungsanlagen, beispielsweise in der Getränkeindustrie, ist es häufig notwendig, Behälter innerhalb und zwischen einzelnen Behälterbehandlungsmaschinen zu transportieren. Häufig finden dabei Transportsterne Anwendung, an denen Greifer zum Greifen der Behälter angeordnet sind. Eine derartige Transportvorrichtung ist beispielsweise aus der WO 98/22374, der US 3,040,492, der DE 10 2009 006 423 oder der EP 1 970 329 bekannt.

Üblicherweise umfassen bekannte Greifer zwei Greifarme, die derart ausgebildet sind, dass sie Behälter seitlich greifen, indem beide Greifarme zum zu greifenden Behälter hin bewegt werden. Dadurch können Behälter mit unterschiedlichen Durchmessern gegriffen werden. Der mechanische Aufbau dieser Greifer ist jedoch üblicherweise verhältnismäßig komplex und damit störungsanfällig.

Aus der DE 27 01 756 A1 ist eine Vorrichtung zum taktweisen Transportieren und Führen von Werkstücken bekannt. Die Vorrichtung ist gekennzeichnet durch die Anordnung eines in Achsrichtung verschieblichen und teildrehbaren Drehkopfs mit einer Anzahl in einer Querebene desselben um gleiche Winkelgrade zueinander versetzt ausgebildeten Greiferarmen, die wahlweise gleichzeitig oder unabhängig um ihre Mittellängsachse drehbar und in den Drehstellungen feststellbar sind und an den freien Enden vorbestimmt betätigbare Greifer oder dergleichen tragen.

Die EP 1 342 678 A1 bezieht sich auf einen Transportstern für Gefäße, der eine um eine Rotorachse drehbare Rotorscheibe aufweist. An dieser Rotorscheibe ist mindestens ein Griff mit zwei relativ zueinander und unabhängig voneinander beweglichen Griffarmen montiert. Zwischen den Griffarmen ist in einer Schließstellung des Griffes je ein Gefäß festhaltbar, wobei jeder der Griffarme mit einer auf die Schließstellung des Griffes gerichteten tangentialen Vorspannung versehen ist.

Aus der US 3,040,492 sind Greifer mit einem feststehenden Greifarm bekannt. Dadurch wird der mechanische Aufwand reduziert. Diese bekannten Greifer können jedoch weniger flexibel auf Durchmesseränderungen der zu greifenden Behälter angepasst werden.

Daher ist es Aufgabe der vorliegenden Erfindung, eine mechanisch vereinfachte und flexibel einsetzbare Transportvorrichtung zum Transportieren von Behältern bereitzustellen. Diese Aufgabe wird durch eine Transportvorrichtung gemäß Patentanspruch 1 gelöst.

Die erfindungsgemäße Transportvorrichtung zum Transportieren von Behältern, insbesondere von Flaschen, umfasst:
wenigstens zwei Greifer, wobei jeder der wenigstens zwei Greifer zwei Greifarme umfasst, und
wenigstens zwei Antriebe, wobei die wenigstens zwei Antriebe je einem der wenigstens zwei Greifer zugeordnet sind, und
wobei für jeden Greifer ein Greifarm feststehend ausgebildet ist und ein Greifarm durch den dem Greifer zugeordneten Antrieb relativ zu dem feststehenden Greifarm bewegbar ist.

Dadurch, dass für jeden Greifer ein Greifarm feststehend ausgebildet ist, kann der Greifer und damit die Transportvorrichtung mechanisch vereinfacht werden. Dadurch, dass jedem der Greifer ein eigener Antrieb zugeordnet ist, kann flexibel auf Änderungen der zu transportierenden Behälter, beispielsweise bei Formatwechseln, reagiert werden.

Unter einem Behälter kann hierin insbesondere ein Gegenstand verstanden werden, der einen Hohlraum aufweist, der insbesondere dem Zweck dient, ein Produkt aufzunehmen und wenigstens teilweise von der Umgebung abzugrenzen. Der wenigstens eine Behälter kann insbesondere ein Behälter für eine Flüssigkeit, beispielsweise für ein Getränk, sein.

Bei den Behältern kann es sich insbesondere um Flaschen, beispielsweise Glas- und/oder Kunststoffflaschen handeln. Die Kunststoffflaschen können insbesondere PET (Polyethylenterephthalat) Flaschen sein.

Die Behälter können insbesondere einen vorherbestimmten Bereich umfassen, an dem sie im Betrieb von einem der wenigstens zwei Greifern gegriffen oder gehaltert werden. Im Falle von Flaschen kann der vorherbestimmte Bereich insbesondere im Bereich des Flaschenhalses angeordnet sein. Der Behälterdurchmesser, insbesondere der Flaschenhalsdurchmesser, kann im vorherbestimmten Bereich zwischen 22 mm und 43 mm betragen.

Die wenigstens zwei Greifer können insbesondere derart ausgebildet sein, dass sie den Behälter seitlich greifen. Mit anderen Worten können die vorherbestimmten Oberflächenbereiche, an denen der Behälter gegriffen wird, an Seitenflächen des Behälters angeordnet sein.

Die Behälter können einen Tragring zum hängenden Transport umfassen. Insbesondere im Bereich einer Mündung können die Behälter ein Gewinde und eine Öffnung aufweisen.

Feststehend kann hierin insbesondere bedeuten, dass der feststehende Arm zum Greifen eines Behälters nicht bewegt wird. Die wenigstens zwei Greifer und damit die feststehenden Greifarme der wenigstens zwei Greifer können jedoch relativ zu einem außerhalb der Transportvorrichtung befindlichen Bezugspunkt mittels der Transportvorrichtung bewegt werden. Insbesondere können die wenigstens zwei Greifer auf einem beweglichen Element der Transportvorrichtung angeordnet oder befestigt sein.

Den wenigstens zwei Greifern, insbesondere einem Greifarm der wenigstens zwei Greifer, kann also jeweils ein eigener Antrieb zugeordnet sein. Mit dem dem Greifer zugeordneten Antrieb kann einer der Greifarme eines Greifer bewegt werden, insbesondere zum Greifen eines Behälters.

Die Greifarme können insbesondere voneinander getrennt angeordnet sein, insbesondere sodass der bewegbare Greifarm unabhängig vom feststehenden Greifarm bewegbar ist.

Der bewegbare Greifarm kann parallel zum feststehenden Greifarm verschiebbar und/oder um eine Schwenkachse schwenkbar sein.

Die wenigstens zwei Antriebe können einen Stellmotor, einen Servomotor, einen Linearmotor, einen Hydraulikmotor und/oder einen pneumatischen Antrieb umfassen. Im Falle eines Hydraulikmotors kann es sich insbesondere um einen Hydraulikzylindern handeln. Bei einem pneumatischen Antrieb kann es sich insbesondere um einen pneumatischen Zylinder handeln. Ein pneumatischer Antrieb kann insbesondere bei hygienischen oder aseptischen Anwendung vorteilhaft sein.

Insbesondere können die wenigstens zwei Antriebe wenigstens einen pneumatischen Antrieb mit einer vorherbestimmten Abluftleitung für die Abluft des pneumatischen Antriebs umfassen. Diese kann insbesondere für sehr hygienische Anwendungen von Vorteil sein. Bei der vorherbestimmten Abluftleitung kann es sich insbesondere um einen Ringkanal handeln, der derart ausgebildet ist, dass darin die Abluft des pneumatischen Antriebs sammelbar ist. Insbesondere kann die vorherbestimmte Abluftleitung derart ausgebildet sein, dass darüber die Abluft des pneumatischen Antriebs, insbesondere über einen Verteiler des pneumatischen Antriebs, in einen Bereich außerhalb der Transportvorrichtung, insbesondere außerhalb eines Isolators, also eines aseptischen Maschinenbereiches, geleitet werden kann.

Der pneumatische Antrieb kann insbesondere einen Unterdruckzylinder umfassen. Dadurch kann eine sehr hygienische und daher sogar für pharmazeutische Anwendungen geeignete Ausbildung erreicht werden.

Die wenigstens zwei Antriebe können jeweils neben, auf, unter und/oder hinter dem bewegbaren Greifarm des zugeordneten Greifers angeordnet sein. Durch die Anordnung des jeweiligen Antriebs kann insbesondere der Platzbedarf der Transportvorrichtung optimiert werden.

Die wenigstens zwei Greifer können derart ausgebildet sein, dass sie Behälter an maximal zwei oder maximal vier Punkten der Behälteroberfläche greifen. Mit anderen Worten können die wenigstens zwei Greifer den gegriffenen Behälter mittels Zweipunktauflage oder Vierpunktauflage greifen.

Die Befestigung des feststehenden Greifarms von wenigstens einem der wenigstens zwei Greifer an der Transportvorrichtung kann elastisch ausgebildet sein. Dadurch können geringe Toleranzen im Durchmesser der zu greifenden Behälter ausgeglichen werden.

Einer der Greifarme von wenigstens einem der wenigstens zwei Greifer kann voneinander beabstandete Greifelemente umfassen, insbesondere sodass dadurch der Greifarm den zu greifenden Behälter an zwei voneinander beabstandeten Oberflächenbereichen greifen kann. Dadurch kann eine besonders stabile Halterung des Behälters erreicht werden.

Beispielsweise kann der Greifarm eine obere und eine untere Platte umfassen (sogenannte Sandwichausführung). Wenn der zu greifende Behälter einen Tragring umfasst, kann die untere Platte des Greifarms unterhalb des Tragrings und die obere Platte oberhalb des Tragrings greifen. Der Behälter kann oberhalb des Tragrings im Bereich der Mündung des Behälters ein Gewinde umfassen. Die obere Platte kann am Gewinde des Behältnisses greifen. In diesem Fall kann der bewegliche Greifarm oberhalb des Tragrings, insbesondere jedoch unterhalb des Gewindes, greifen. Dadurch kann eine lotrechte Ausrichtung der Behältermittelachse und damit eine verbesserte Übergabe von einer Transportvorrichtung zu einer anderen Transportvorrichtung erreicht werden.

Die Transportvorrichtung kann als Rundläufermaschine, insbesondere als Transportstern ausgebildet sein. Mit anderen Worten kann die Transportvorrichtung einem Transportstern entsprechen. Insbesondere können am äußeren Umfang des Transportsterns mehrere, insbesondere zwei oder mehr, oben beschriebene Greifer angeordnet sein.

Ein Transportstern kann dabei einen Teilkreisdurchmesser von mehr als 500 mm, insbesondere von mehr als 540 mm, aufweisen.

Die Transportvorrichtung kann außerdem ein Steuerungselement umfassen, das insbesondere derart ausgebildet ist, dass es einen Antrieb der Transportvorrichtung, insbesondere des Transportsterns, derart ansteuert, dass ein Mittenversatz, der beispielsweise bei einem Formatwechsel hervorgerufen wird, ausgeglichen wird.

Unter einem Mittenversatz kann hierbei verstanden werden, dass die Mittelachsen von unterschiedlichen Behältern mit unterschiedlichen Durchmessern im gegriffenen Zustand gegeneinander verschoben sind.

Ebenso kann das Steuerungselement mit Hilfe der den Greifern zugeordneten Antriebe den Ausgangsabstand des beweglichen Greifarms vom feststehenden Greifarm einstellen. Damit kann auf unterschiedliche Behälterdurchmesser, beispielsweise nach einem Formatwechsel, reagiert werden.

Die Erfindung stellt außerdem eine Behälterbehandlungsanlage bereit, umfassend eine oben beschriebene Transportvorrichtung.

Die Behälterbehandlungsanlage kann insbesondere eine Rundläufermaschine umfassen, insbesondere zur kontinuierlichen Behandlung von Behältern mit mehreren Behandlungselementen, die in, insbesondere gleichmäßigem, Abstand auf dem äußeren Umfang eines Karussells der Rundläufermaschine verteilt sind. Die Transportvorrichtung kann in diesem Fall einem Einlaufstern, einem Auslaufstern oder einem Transferstern entsprechen.

Die Behälterbehandlungsanlage kann insbesondere eine Behälterbehandlungsanlage in der Getränkeindustrie sein. Die Behälterbehandlungsmaschine kann insbesondere ein Sterilisator, ein Rinser (für flüssige und/oder gasförmige Behandlungsfluide, insbesondere verschieden temperiert), eine Füllmaschine, eine Etikettiermaschine und/oder eine Inspektionsmaschine sein.

Weiter Merkmale und Vorteile der Erfindung werden nachfolgend anhand der beispielhaften Figuren erläutert. Dabei zeigt:
- Figur 1: einen Teil einer beispielhaften Transportvorrichtung umfassend zwei Greifer;
- Figur 2: einen beispielhaften Greifer einer beispielhaften Transportvorrichtung;
- Figur 3: eine Illustration eines Greifers einer beispielhaften Transportvorrichtung für unterschiedliche Behälterdurchmesser; und
- Figur 4: zwei beispielhafte Transportvorrichtungen.

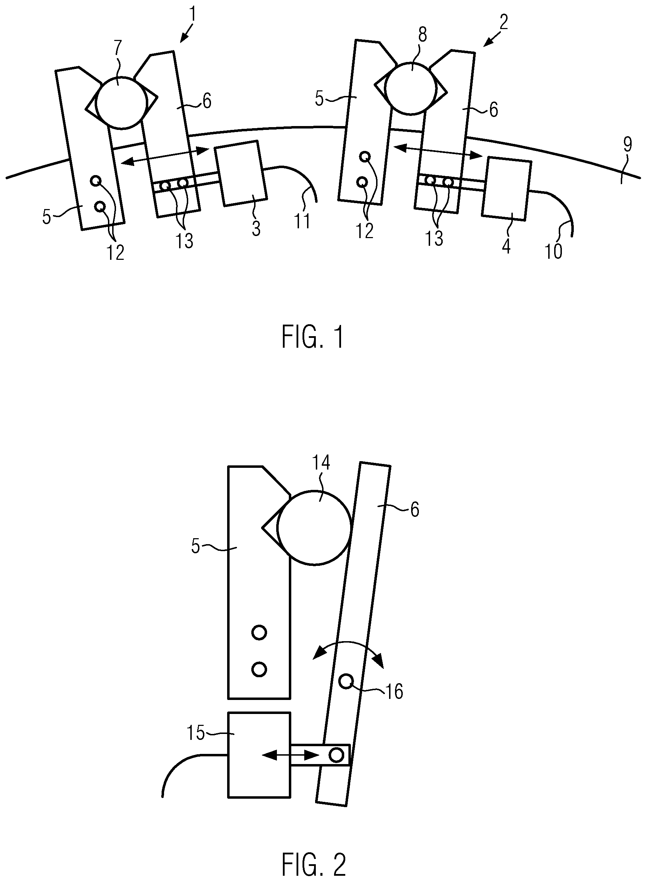

In Figur 1 ist ein Teil eines beispielhaften Transportsterns dargestellt. Am äußeren Umfang des Transportsterns 9 sind ein erster Greifer 1 und ein zweiter Greifer 2 angeordnet. Dem ersten Greifer 1 ist ein erster Antrieb 3 und dem zweiten Greifer 2 ein zweiter Antrieb 4 zugeordnet. Über Versorgungsleitungen 10, 11 können die Antriebe 3, 4 individuell angesteuert werden.

In Figur 1 sind nur zwei Greifer dargestellt. Der beispielhafte Transportstern kann jedoch noch mehrere Greifer umfassen, insbesondere wobei auch jedem der zusätzlichen Greifer ein eigener Antrieb zugeordnet ist.

Der erste Greifer 1 und der zweite Greifer 2 umfassen je einen feststehenden Greifarm 5 und einen beweglichen Greifarm 6. Der bewegliche Greifarm 6 kann durch den dem Greifer 1, 2 zugeordneten Antrieb 3, 4 relativ zu dem feststehenden Greifarm 5 bewegt werden. In diesem Beispiel kann der bewegbare Greifarm 6 parallel zum feststehenden Greifarm 5 verschoben werden. Dadurch können beispielhafte Behälter 7, 8 gegriffen werden. Die Parallelbewegung ist durch doppelseitige Pfeile in Figur 1 angedeutet.

Die feststehenden Greifarme 5 sind mit Befestigungselementen 12 mit einem Karussell 9 des Transportsterns verbunden. Die beweglichen Greifarme 6 wiederum sind mit Befestigungselementen 13 mit dem jeweils zugeordneten Antrieb 3 beziehungsweise 4 verbunden.

Im Betrieb werden die Greifer und damit die Greifarme um eine Rotationsachse des Karussells 9 gedreht. Die feststehenden Greifarme 5 sind jedoch relativ zum drehenden Karussell 9 im Wesentlichen feststehend, also unbeweglich. Die Befestigung der feststehenden Greifarme 5 am Karussell 9 kann allerdings derart ausgebildet sein, dass die Befestigung des feststehenden Greifarms 5 elastisch ausgebildet ist. Damit können geringe Toleranzen im Durchmesser der zu greifenden Behälter 7, 8 ausgeglichen werden.

Der erste Antrieb 3 und/oder der zweite Antrieb 4 können ein Stellmotor, ein Servomotor, ein Linearmotor, ein Hydraulikmotor und/oder ein pneumatischer Antrieb sein. Im Falle eines Hydraulikmotors kann es sich insbesondere um einen Hydraulikzylindern handeln. Bei einem pneumatischen Antrieb kann es sich insbesondere um einen pneumatischen Zylinder handeln. Ein pneumatischer Antrieb kann insbesondere bei hygienischen oder aseptischen Anwendung vorteilhaft sein.

Insbesondere können der erste Antrieb 3 und/oder der zweite Antrieb 4 wenigstens einen pneumatischen Antrieb mit einer vorherbestimmten Abluftleitung für die Abluft des pneumatischen Antriebs umfassen. Bei der vorherbestimmten Abluftleitung kann es sich insbesondere um einen Ringkanal handeln, der derart ausgebildet ist, dass darin die Abluft des pneumatischen Antriebs sammelbar ist. Insbesondere kann die vorherbestimmte Abluftleitung derart ausgebildet sein, dass darüber die Abluft des pneumatischen Antriebs, insbesondere über einen Verteiler des pneumatischen Antriebs, in einen Bereich außerhalb der Transportvorrichtung, insbesondere außerhalb eines Isolators, geleitet werden kann.

Dadurch, dass für jeden Greifer ein Greifarm feststehend ausgebildet ist, kann der Greifer und damit die Transportvorrichtung mechanisch vereinfacht werden. Dadurch, dass jedem der Greifer ein eigener Antrieb zugeordnet ist, kann flexibel auf Änderungen der zu transportierenden Behälter, beispielsweise bei Formatwechseln, reagiert werden. Beispielsweise kann auch der Druck mit denen die Behälter gegriffen werden durch die individuellen Antriebe auf einfache Weise an die zu greifenden Behälter angepasst werden.

Figur 2 zeigt einen weiteren beispielhaften Greifer für eine Transportvorrichtung zum Transportieren von Behältern. Der bewegliche Greifarm 6 ist in diesem Fall um eine Schwenkachse 16 schwenkbar. Die Schwenkbewegung wird dabei durch den Antrieb 15 hervorgerufen. Dadurch kann ein beispielhafter Behälter 14 zwischen dem feststehenden Greifarm 5 und dem beweglichen Greifarm 6 gegriffen oder geklemmt werden.

Beim Einsatz eines feststehenden Greifarms 5 kommt es bei unterschiedlichen Durchmessern der zu greifenden Behälter zu einem sogenannten Teilungsversatz oder Mittenversatz. Mit anderen Worten sind die Mittelachsen von unterschiedlichen Behältern mit unterschiedlichen Durchmessern gegeneinander verschoben.

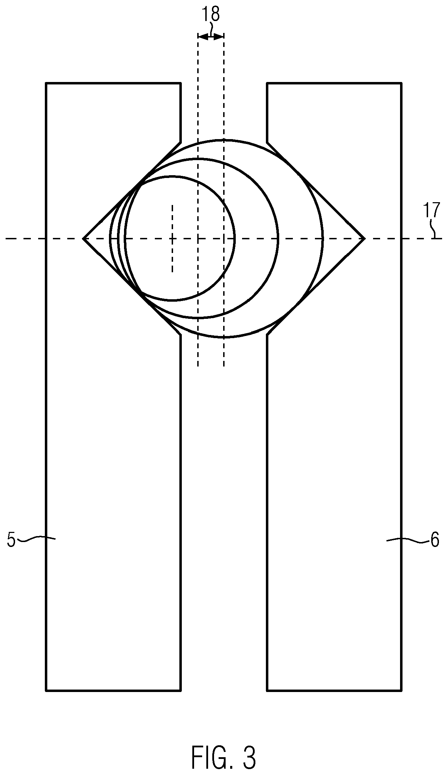

Figur 3 zeigt eine Illustration dieses Mittenversatzes. Es sind in Figur 3 drei Behälter mit unterschiedlichen Durchmessern angedeutet. Die Mittel- oder Symmetrieachsen verlaufen dabei senkrecht zur Zeichnungsebene. Dadurch, dass der feststehende Greifarm 5 beim Greifen unbewegt ist und nur der bewegliche Greifarm 6 zum Greifen des Behälters relativ zum feststehenden Greifarm 5 bewegt wird, liegen die Mittelachsen, insbesondere die Schnitte der Mittelachsen mit der Zeichnungsebene, an verschiedenen Orten der Geraden 17. Der beispielhafte Versatz zweier beispielhafter Mittelachsen zueinander ist in Figur 3 als Abstand 18 illustriert.

Wenn der vom Greifarm gehalterte Behälter beispielsweise an einen anderen Greifarm übergeben werden soll, kann dieser Mittenversatz zu einer ungenauen Übergabe führen. Daher kann die Transportvorrichtung ein Steuerungselement umfassen, das derart ausgebildet ist, dass es den Antrieb des Transportsterns derart ansteuert, dass der Mittenversatz, der beispielsweise bei einem Formatwechsel hervorgerufen wird, ausgeglichen wird.

Ebenso kann das Steuerungselement mit Hilfe der den Greifern zugeordneten Antriebe den Ausgangsabstand des beweglichen Greifarms 6 vom feststehenden Greifarm 5 einstellen.

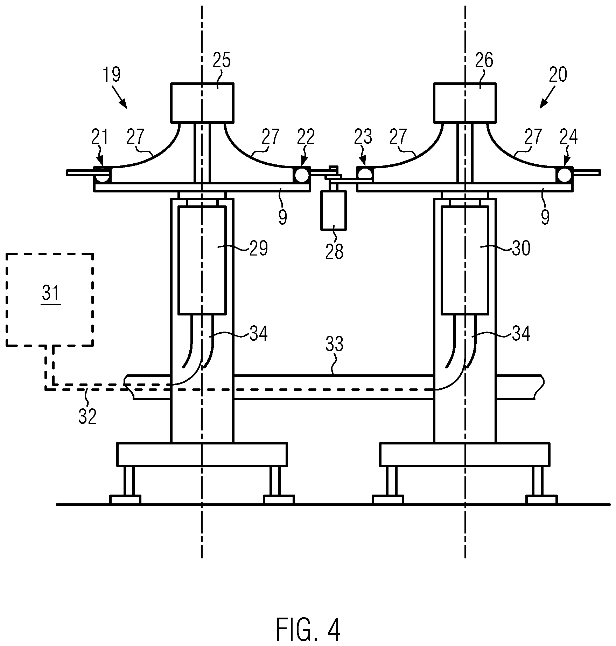

Figur 4 zeigt zwei beispielhafte Transportvorrichtungen, insbesondere in Form von zwei Transportsternen 19 beziehungsweise 20. Der erste Transportstern 19 umfasst zwei Greifer 21 und 22 zum Greifen von Behältern. In gleicher Weise umfasst der zweite Transportstern 20 zwei Greifer 23 und 24. Die Greifer 21, 22, 23 und 24 umfassen jeweils zwei Greifarme, wobei je ein Greifarm feststehend ausgebildet ist und ein Greifarm durch einen dem Greifer zugeordneten Antrieb relativ zum feststehenden Greifarm bewegbar ist. Die Greifer sind jeweils auf einem Karussell 9 angeordnet. Über einen Schleifringüberträger oder Pneumatikverteiler 25 oder 26 und entsprechende Zuleitungen 27 können die Antriebe der Greifarme 21, 22, 23 und 24 gesteuert werden.

In Figur 4 ist außerdem ein beispielhafter Behälter 28 dargestellt, der beispielhaft vom ersten Transportstern 19 an den zweiten Transportstern 26 übergeben wird.

Jeder der Transportsterne 19 beziehungsweise 20 umfasst außerdem einen Servoantrieb 29 beziehungsweise 30, mit denen das jeweilige Karussell 9 gedreht werden kann. Die Rotationsachse der Transportsterne ist als senkrechte gestrichelte Linie in Figur 4 illustriert. Über Versorgungsleitungen 34 können die Servoantriebe 29 beziehungsweise 30 angesteuert werden. Das in Figur 4 gezeigte System umfasst außerdem eine Steuerungseinrichtung 31, welche über Datenleitungen 32 den ersten Transportstern 19 und/oder den zweiten Transportstern 20 ansteuern kann. Die Datenleitungen können zwischen den Transportsternen, beispielsweise in einer Verbindungsstrebe 33 verlaufen.

Jeder der Transportsterne 19 beziehungsweise 20 kann einen Teilkreisdurchmesser von mehr als 540 mm aufweisen. Für Behälterhalsdurchmesser von 22 mm bis 43 mm wurde dabei von den Erfindern überraschenderweise festgestellt, dass trotz Mittenversatz die Abweichung (radialer Versatz) zwischen der theoretisch geforderten Linie (Teilkreis) und der tatsächlichen Linie (Gerade) so gering ist, dass eine exakte Übergabe zwischen den Sternen erfolgen kann.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind. Insbesondere sind anstelle von als Rundläufermaschinen ausgebildeten Transportvorrichtungen auch lineare Transportvorrichtungen denkbar.

## Patentansprüche

1. Transportvorrichtung zum Transportieren von Behältern, insbesondere von Flaschen, umfassend:
wenigstens zwei Greifer (1; 2), wobei jeder der wenigstens zwei Greifer (1; 2) zwei Greifarme umfasst, wobei für jeden Greifer (1; 2) ein Greifarm (5) feststehend ausgebildet ist und ein Greifarm (6) durch einen dem Greifer (1; 2) zugeordneten Antrieb (3; 4) relativ zu dem feststehenden Greifarm (5) bewegbar ist;
**dadurch gekennzeichnet, dass**
wenigstens zwei Antriebe (3; 4) vorgesehen sind, wobei die wenigstens zwei Antriebe (3; 4) je einem der wenigstens zwei Greifer (1; 2) zugeordnet sind, sodass für jeden Greifer ein eigener Antrieb vorgesehen ist.

2. Transportvorrichtung nach Anspruch 1, wobei der bewegbare Greifarm (6) parallel zum feststehenden Greifarm (5) verschiebbar und/oder um eine Schwenkachse schwenkbar ist.

3. Transportvorrichtung nach Anspruch 1 oder 2, wobei die wenigstens zwei Antriebe (3; 4) einen Stellmotor, einen Servomotor, einen Linearmotor, einen Hydraulikmotor und/oder einen pneumatischen Antrieb umfassen.

4. Transportvorrichtung nach einem der vorangegangenen Ansprüche, wobei die wenigstens zwei Antriebe (3; 4) wenigstens einen pneumatischen Antrieb mit einer vorherbestimmten Abluftleitung für die Abluft des pneumatischen Antriebs umfassen.

5. Transportvorrichtung nach Anspruch 3 oder 4, wobei der pneumatische Antrieb einen Unterdruckzylinder umfasst.

6. Transportvorrichtung nach einem der vorangegangenen Ansprüche, wobei die wenigstens zwei Antriebe (3; 4) jeweils neben, auf, unter und/oder hinter dem bewegbaren Greifarm (6) des zugeordneten Greifers (1; 2) angeordnet sind.

7. Transportvorrichtung nach einem der vorangegangenen Ansprüche, wobei die wenigstens zwei Greifer (1; 2) derart ausgebildet sind, dass sie Behälter an maximal zwei oder maximal vier Punkten der Behälteroberfläche greifen.

8. Transportvorrichtung nach einem der vorangegangenen Ansprüche, wobei die Befestigung (12) des feststehenden Greifarms (5) von wenigstens einem der wenigstens zwei Greifer (1; 2) an der Transportvorrichtung elastisch ausgebildet ist.

9. Transportvorrichtung nach einem der vorangegangenen Ansprüche, wobei einer der Greifarme von wenigstens einem der wenigstens zwei Greifer (1; 2) zwei voneinander beabstandete Greifelemente umfasst.

10. Transportvorrichtung nach einem der vorangegangenen Ansprüche, wobei die Transportvorrichtung als Rundläufermaschine, insbesondere als Transportstern (19; 20), ausgebildet ist.

## Claims

1. Transport device for transporting containers, in particular bottles, comprising:
at least two grippers (1; 2), each of the at least two grippers (1; 2) comprising two gripper arms,
one gripper arm (5) of each gripper (1; 2) being designed to be stationary and one gripper arm (6) being movable relative to the stationary gripper arm (5) by means of a drive (3; 4) assigned to the gripper (1; 2);
**characterised in that**
at least two drives (3; 4) are provided, the at least two drives (3; 4) each being assigned to one of the at least two grippers (1; 2) such that each gripper is provided with a separate drive.

2. Transport device according to claim 1, wherein the movable gripper arm (6) can be slid in parallel with the stationary gripper arm (5) and/or can be pivoted about a pivot axis.

3. Transport device according to either claim 1 or claim 2, wherein the at least two drives (3; 4) comprise a positioning motor, a servomotor, a linear motor, a hydraulic motor and/or a pneumatic drive.

4. Transport device according to any of the preceding claims, wherein the at least two drives (3; 4) comprise at least one pneumatic drive comprising a predetermined exhaust air duct for the exhaust air of the pneumatic drive.

5. Transport device according to either claim 3 or claim 4, wherein the pneumatic drive comprises a vacuum cylinder.

6. Transport device according to any of the preceding claims, wherein the at least two drives (3; 4) are each arranged next to, on, below and/or behind the movable gripper arm (6) of the associated gripper (1; 2).

7. Transport device according to any of the preceding claims, wherein the at least two grippers (1; 2) are designed such that they grip containers at a maximum of two or a maximum of four points on the container surface.

8. Transport device according to any of the preceding claims, wherein the attachment (12) to the transport device of the stationary gripper arm (5) of at least one of the at least two grippers (1; 2) is designed to be resilient.

9. Transport device according to any of the preceding claims, wherein one of the gripper arms of at least one of the at least two grippers (1; 2) comprises two mutually spaced gripper elements.

10. Transport device according to any of the preceding claims, wherein the transport device is designed as a rotary machine, in particular as a transport star wheel (19; 20).

## Revendications

1. Dispositif de transport pour le transport de contenants, notamment de bouteilles, comprenant :
au moins deux préhenseurs (1; 2), chacun desdits au moins deux préhenseurs (1; 2) comprenant deux bras de préhension, et pour chaque préhenseur (1; 2) un bras de préhension (5) est de configuration fixe et un bras de préhension (6) est mobile par rapport au bras de préhension fixe (5), à l'aide d'un entraînement (3; 4) associé au préhenseur (1; 2) ;
**caractérisé en ce que**
sont prévus au moins deux entraînements (3; 4), lesdits au moins deux entraînements (3; 4) étant associés chacun respectivement à l'un desdits au moins deux préhenseurs (1; 2), de sorte qu'il est prévu pour chaque préhenseur son propre entraînement.

2. Dispositif de transport selon la revendication 1, dans lequel le bras de préhension mobile (6) peut coulisser par rapport au bras de préhension fixe (5) en restant parallèle à ce dernier et/ou peut pivoter autour d'un axe de pivotement.

3. Dispositif de transport selon la revendication 1 ou la revendication 2, dans lequel lesdits au moins deux entraînements (3; 4) comprennent un moteur de réglage, un servomoteur, un moteur linéaire, un moteur hydraulique et/ou un entraînement pneumatique.

4. Dispositif de transport selon l'une des revendications précédentes, dans lequel lesdits au moins deux entraînements (3; 4) comprennent au moins un entraînement pneumatique avec une conduite d'air d'échappement prédéfinie pour l'air d'échappement de l'entraînement pneumatique.

5. Dispositif de transport selon la revendication 3 ou la revendication 4, dans lequel l'entraînement pneumatique comprend un cylindre à dépression.

6. Dispositif de transport selon l'une des revendications précédentes, dans lequel lesdits au moins deux entraînements (3; 4) sont agencés respectivement à côté, sur, sous et/ou derrière le bras de préhension mobile (6) du préhenseur (1; 2) associé.

7. Dispositif de transport selon l'une des revendications précédentes, dans lequel lesdits au moins deux préhenseurs (1; 2) sont conçus de manière à saisir les contenants en au maximum deux points ou au maximum quatre points de la surface du contenant.

8. Dispositif de transport selon l'une des revendications précédentes, dans lequel la fixation (12) du bras de préhension fixe (5) d'au moins l'un desdits au moins deux préhenseurs (1; 2) au dispositif de transport, est de configuration élastique.

9. Dispositif de transport selon l'une des revendications précédentes, dans lequel l'un des bras de préhension de l'un au moins desdits au moins deux préhenseurs (1; 2) comprend deux éléments de préhension espacés l'un de l'autre.

10. Dispositif de transport selon l'une des revendications précédentes, le dispositif de transport se présentant sous la forme d'une machine à table rotative, notamment sous la forme d'une étoile de transport (19; 20).
